# EUROPEAN PATENT SPECIFICATION

(11) **EP 4 074 598 B1**
(45) Date of publication and mention of the grant of the patent: **20.08.2025**
(21) Application number: 22165260.5
(22) Date of filing: 29.03.2022
(51) Int. Cl.: B64D 11/06

(54) **TRAY TABLE APPARATUS FOR A CONSOLE ELEMENT, CONSOLE ELEMENT AND SEAT UNIT**
ABLAGETISCHVORRICHTUNG FÜR EIN KONSOLENELEMENT, KONSOLENELEMENT UND SITZEINHEIT
APPAREIL DE TABLE DE PLATEAU POUR UN ÉLÉMENT DE CONSOLE, ÉLÉMENT DE CONSOLE ET UNITÉ DE SIÈGE

(30) Priority: 13.04.2021 US 202117229779
(43) Date of publication of application: 19.10.2022
(73) Proprietor: Adient Aerospace, LLC, Bothell, WA 98011 (US)
(72) Inventor: Carlioz, Victor, Bothell,, 98011 (US); Cleary, Matthew, Bothell,, 98011 (US)
(74) Representative: Arnold & Siedsma

(56) References cited:
- EP-A1- 2 955 058
- WO-A1-2008/031506
- WO-A2-2012/131384
- GB-A- 1 600 744
- GB-A- 2 541 660
- US-A- 5 562 049
- US-A1- 2009 078 169
- US-A1- 2015 284 088
- US-B2- 10 486 572

## Description

### BACKGROUND

Seat units, such as for an aircraft, can have a seat and an adjacent console element. The console element in some configuration has a tray table for the adjacent seat. For example, some known configurations provide an aircraft seat device having a table device with at least two linear guidance elements directly mounted to a console to allow a linear translational movement. In this known configuration, at least two pivot joints implement different rotational axes to carry out rotational movement of the table device. This configuration can make assembly, installation, and/or maintenance of the component parts difficult and/or time consuming. Additionally, the configuration may have a less appealing look as a result of the exposed elements.

US 10 486 572 B2, according to its abstract, states that a portable, tray and carrying case apparatus is disclosed. The apparatus includes a tray adapted for being placed in at least a working position and a stowed position; a carrying case for storing or stowing the tray when not in use; a support arm secured to the carrying case and adapted for being placed in an elevated position whereby the tray may be placed in the working position; a support arm locking mechanism for locking the support arm in the elevated position relative to the carrying case; and a tray locking and support bracket assembly for locking the tray in the working position relative to the support arm and for providing support to the tray when the tray is in the working position and being used by a user. The portable, tray and carrying case apparatus may further include a handle and/or an apparatus stabilizing structure.

GB 1 600 744 A relates to arm-stowed table installations and discloses a table stowed in an arm of an aircraft seat, which is pivotally mounted on a support block that moves along a slide on a removable cassette fitted to the arm.

US 2009/078169 A1, according to its abstract, states that a folding table and support frame assembly is disclosed. The table comprises two planar portions connected by a hinging member. One of the planar portions is coupled to a support frame such that the folded table can be moved into a stowed position within the support frame assembly. The planar portions comprise a proximal portion or inner member and a distal portion or outer member. The proximal portion and distal portion are connected to one another by the hinging member or middle member. The hinging member enables the rotation of the distal portion into a folded relationship upon the proximal portion. When the two planar portions are folded, they provide a smaller table surface in a half-open or partially extended position. When the two planar portions are opened along the hinging member, the planar portions and the hinging member provide a larger contiguous table in the fully extended position.

US 2015/284088 A1, according to its abstract, relates to a table arrangement for use in an aircraft seat module, the table arrangement comprising a first table element suitable for being movably mounted to a mounting structure of the aircraft seat module, the first table element being provided with a first table surface, a second table element provided with a second table surface substantially parallel to the first table surface, wherein the second table element is mounted to the first table element, such that the second table element is moveable from a first position with respect to the first table element to a second position with respect to the first table element, the second position being transformed from the first position within the plane of the second table element. Also an aircraft seat module, an aircraft and a method of deploying a table arrangement are provided.

### SUMMARY

According to the present disclosure, a tray table apparatus as defined in independent claim 1 is provided. Further embodiments of the claimed invention are defined in the dependent claims. Although the claimed invention is only defined by the claims, the below embodiments, examples, and aspects are present for aiding in understanding the background and advantages of the claimed invention.

In one aspect, a tray table apparatus includes a table carrier structure releasably mountable to a console element, wherein the table carrier structure is configured as a housing. The tray table apparatus further includes an adjustment mechanism housed within the table carrier structure, wherein the adjustment mechanism has a table support element movable relative to the table carrier structure. The tray table apparatus also includes a table element coupled to the table support element and together movable between at least a retracted stowed position in which the table element is housed within the table carrier structure and a deployed use position in which the table element protrudes from the table carrier structure.

In another aspect, a console element for a seat includes a console base structure having a front utility structure and an open rear structure. The console element further includes a tray table apparatus having a table carrier structure releasably mountable to the console base structure, and an adjustment mechanism housed within the table carrier structure and having a table support element movable relative to the table carrier structure. The table element is coupled to the table support element, with the table element movable with the table carrier structure between at least a retracted stowed position in which the table element is housed within the table carrier structure and a deployed use position in which the table element protrudes from the table carrier structure.

In another aspect, an aircraft seat unit includes a console element arranged substantially laterally relative to the seat and having a front utility structure for a passenger of the seat and an open rear structure with at least a tray table apparatus for a passenger seated behind the console element. A tray table apparatus having a table carrier structure is releasably mountable to a console base structure of the console element. An adjustment mechanism is housed within the table carrier structure and has a table support element movable relative to the table carrier structure between at least a retracted stowed position in which a table element is housed within the table carrier structure and a deployed use position in which a table element protrudes from the table carrier structure.

### BRIEF DESCRIPTION OF THE DRAWINGS

The present disclosure will become more fully understood from the detailed description given herein below and the accompanying drawings which are given by way of illustration only, and thus, are not limitative of the present disclosure, wherein:
Figures 1A to 1C show schematically in upper views an implementation of a tray table apparatus in accordance with an example;
Figures 2A and 2B show schematically in a perspective view and a top view an implementation of a tray table apparatus;
Figure 3 shows schematically in a rear view an implementation of a console element comprising a tray table apparatus;
Figures 4A to 4C show schematically in upper views implementations of seat arrangements having a number of seat units arranged one behind another;
Figures 5A to 5C show in perspective views an implementation of a seat arrangement according to figure 4C;
Figure 6 is a block diagram of an apparatus production and service method that advantageously employs various aspects of the disclosure;
Figure 7 is a block diagram of an apparatus for which various aspects of the disclosure may be advantageously employed; and
Figure 8 is a schematic perspective view of a particular flying apparatus.

Corresponding parts are marked with the same reference symbols in all figures.

### DETAILED DESCRIPTION

The foregoing summary, as well as the following detailed description of certain examples and implementations will be better understood when read in conjunction with the appended drawings. As used herein, an element or step recited in the singular and preceded by the word "a" or "an" should be understood as not necessarily excluding the plural of the elements or steps. Further, references to "one example" or "one implementation" are not intended to be interpreted as excluding the existence of additional examples or implementations that also incorporate the recited features. Moreover, unless explicitly stated to the contrary, examples "comprising" or "having" an element or a plurality of elements having a particular property can include additional elements not having that property.

While various spatial and directional terms, such as "top," "bottom," "upper," "lower," "vertical," and the like are used to describe examples and implementations of the present disclosure, it is understood that such terms are merely used with respect to the orientations shown in the drawings. The orientations can be inverted, rotated, or otherwise changed, such that a top side becomes a bottom side if the structure is flipped 180 degrees, becomes a left side or a right side if the structure is pivoted 90 degrees, and the like.

Certain implementations of the present disclosure provide a tray table apparatus for a console element, wherein the tray table apparatus is configured as a pre-assembled module that is releasably mountable to the console element. As a result, an assembly and disassembly for maintenance work, repair work or component exchanging is simplified in various examples.

In some examples, a console element with a tray table apparatus and seat unit include a seat and a substantially adjacent console element with a tray table apparatus for a passenger seated behind the seat unit. In one implementation, a table carrier structure is releasably mountable to a console element and is configured as a housing. An adjustment mechanism is housed within the table carrier structure and has a table support element movable relative to the table carrier structure. A table element is fixed to the table support element and movable between at least a retracted stowed position in which the table element is housed within the table carrier structure and a deployed use position in which the table element protrudes from the table carrier structure.

A simple and compact tray table apparatus that can be used with different types of console elements, and is substantially lightweight having a compact built-in design. Any component of the tray table apparatus is exchangeable in an easy manner, and the table carrier structure is configurable in different shapes, such that the structure is individually formed to fit to a console element. In operation, the tray table element, such as a table top, is stowed in the retracted stowed position within the table carrier structure, such that the tray table element is protected against external influences, e.g. dust and dirt. As such, an optical appearance is improved and passenger space increased when the tray table element is in the retracted stowed position.

As described in more detail herein, the tray table apparatus is configured in some implementations as a cassette assembly. For example, the console element or any other structural component of a vehicle having an open space can be used, such that the tray table apparatus is easily insertable into the open space (e.g., at least form-fitting and/or force-fitting attachable thereto). The tray table apparatus is a pre-assembled module (e.g., the table carrier structure, the adjustment mechanism and the table element are pre-assembled together to form the pre-assembled module) in some examples and configured to be releasably mountable to a console element or other aircraft cabin element, such as a bulkhead. For example, the tray table apparatus can be attached to any free mounting space of a structural element.

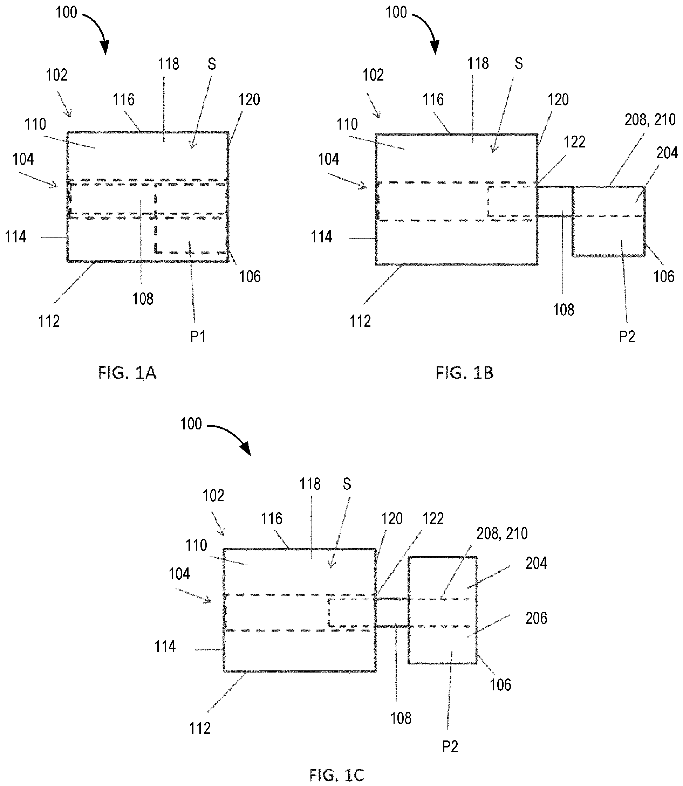

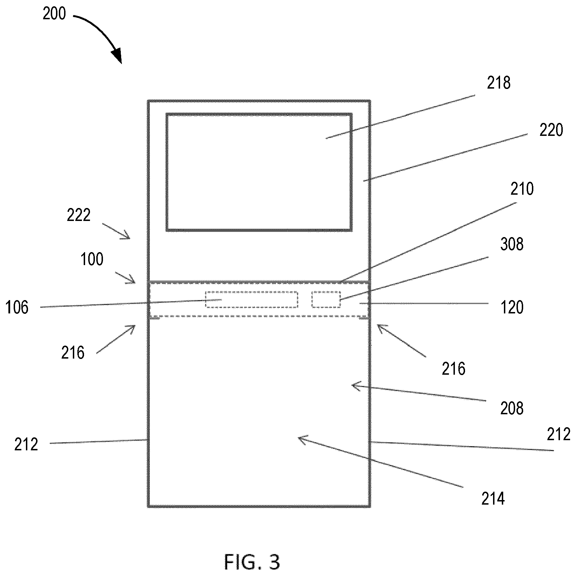

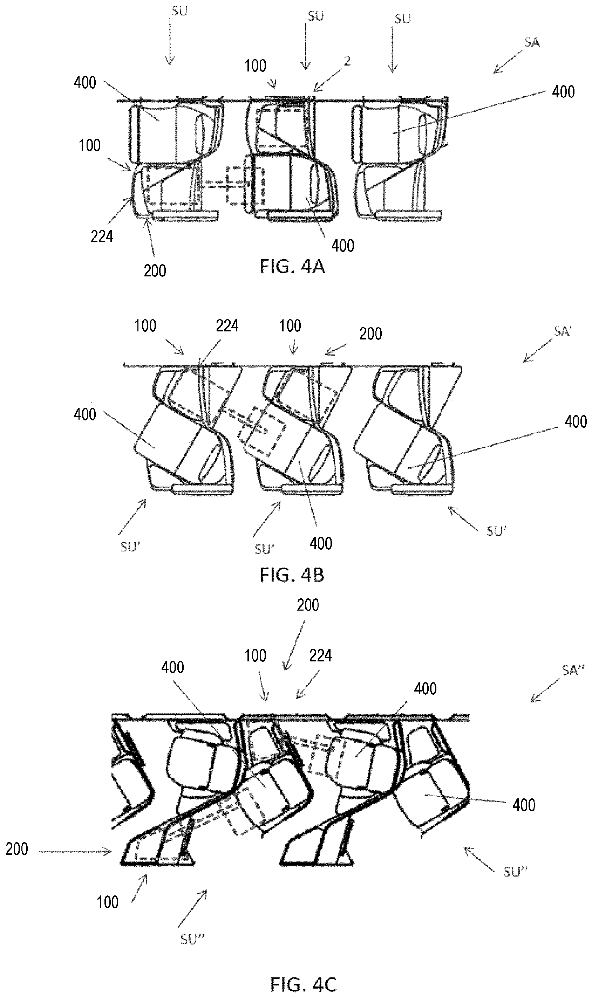

Figures 1A to 1C show schematically in upper views an implementation of a tray table apparatus 100 for a console element 200 (shown in Figures 3 and 4A to 4C). The tray table apparatus 100 in the illustrated example includes a table carrier structure 102 that is releasably mountable to the console element 200 and defines a housing or casing. The tray table apparatus 100 includes an adjustment mechanism 104 that is housed within the table carrier structure 102. The adjustment mechanism 104 includes a table support element 108 (e.g., a support arm or other support structure) movable relative to the table carrier structure 102. In the illustrated example, the tray table apparatus 100 further includes a table element 106, such as a passenger table, coupled (e.g., fixedly attached) to the table support element 108. In operation, the table element 106 is movable between at least (i) a retracted stowed position P1 (as shown in Figure 1A) in which the table element 106 is housed within the table carrier structure 102 and (ii) a deployed use position P2 (as shown in Figures 1B and 1C) in which the table element 106 protrudes or extends from the table carrier structure 102 (e.g., is useable by a passenger on an aircraft). That is, in the deployed use position P2, the table support element 108 is moved (e.g., translated) outward from the table carrier structure 102, such that the table element 106 housed therein is moved to be accessible by a user.

In one implementation, the tray table apparatus 100 is configured as a pre-mounted assembly, such as a cassette-like pre-mounted assembly. For example, Figure 1A shows the tray table apparatus 100 with pre-assembled components, wherein the table element 106 and the table support element 108 are positioned within the table carrier structure 102. The tray table apparatus 100 with pre-assembled components is a fully functional package in various implementations. For example, the console element 200 or any other structural component of a vehicle cabin may provide an open space in which the tray table apparatus 100 is easily insertable, when the table element 106 is in the retracted stowed position P1 (e.g., inserted into the open space and form-fitting and/or force-fitting attachable thereto).

In one example, the tray table apparatus 100 is configured as a pre-assembled module M to be releasably mountable to the console element 200 or any other aircraft cabin element, such as a bulkhead. For instance, the table carrier structure 102, the adjustment mechanism 104 and the table element 106 are assembled together to build or form the pre-assembled module M. As such, installation and/or replacement of the is facilitated by the pre-assembled design of the module M.

The table carrier structure 102 defines a housing in the illustrated example that includes an open housing side 110 (e.g., an open upper housing side). For example, in an aircraft application, the table carrier structure 102 is configured to be open towards a ceiling of an aircraft cabin. As such, the adjustment mechanism 104 is easily mounted into the table carrier structure 102 through the open housing side 110. When arranged in the console element 200, the open housing side 110 (e.g., open towards a ceiling of the aircraft cabin) may be covered by an upper structure of the console element 200 (e.g., an outer covering) as described in more detail herein. Optionally or additionally, the table carrier structure 102 is open and freely accessible from one or more different housing sides 112, 114, 116, for example, to exchange and/or repair single components. Thus, in various examples, the table carrier structure 102 is configured as a housing which is at least partially open on at least one side. As such, the adjustment mechanism 104 in some examples is integrated into the table carrier structure 102 in a simplified manner through the open housing side 110 of the table carrier structure 102.

It should be noted that different configurations of the table carrier structure 102 are contemplated. For example, the table carrier structure 102 can be configured as a casing or housing with fully covered sides embedding a mounting space within the casing or housing.

The table carrier structure 102 includes a base plate 118 and at least one front wall 120 extending vertically from the base plate 118, for example, perpendicular to the base plate 118 and in a direction towards the ceiling of the aircraft cabin. The base plate 118 and the front wall 120 define a space S behind the front wall 120, wherein in the retracted stowed position P1, the table element 106 is fully retracted and arranged behind the front wall 120 and above the base plate 118. In the deployed use position P2, the table element 106 is guided and passes through an opening 122 of the front wall 120 of the table carrier structure 102. That is, the table element 106 is movable in and out of the table carrier structure 102 through the opening 122 in the front wall 120.

In one example, the space S behind the front wall 120 is at least open in a direction towards the ceiling of the aircraft cabin. The base plate 118 is releasably mountable to the console element 200. As should be appreciated, because the table carrier structure 102 is in the console element 200, the table carrier structure 102 can be assembled from a reduced number of components, such that the console element 200 encloses the open housing sides 110, 112, 114, 116. In some examples, the front wall 120 is configured to be flush with a console surface (e.g., forming a planar surface) and covering the space S behind the front wall 120 from a passenger's view, as well as providing a protective covering for the adjustment mechanism 104 and the table element 106 when stowed as described in more detail herein.

Thus, the front wall 120 includes at least one opening 122 through which the table support element 108 (and the table element 106 coupled thereto) are guided when the table element 106 is moved to or positioned in the deployed use position P2. In the illustrated implementation, a front side 202 of the table element 106, which points in a direction towards a passenger, is flush with the front wall 120 in the retracted stowed position P1. Optionally, in some implementations, the front side 202 is configured to be located slightly protruding from the front wall 120 (pointing in a direction towards the passenger) when in the retracted stowed position P1, such that the passenger can grab the protruding portion of the table element 106 and manually pull the table element 106 from the retracted stowed position P1 to the deployed use position P2.

It should be noted that the base plate 118 in various implementations supports various components in addition to the components described above. The adjustment mechanism 104 is supported on the base plate 118 of the table carrier structure 102.

In some implementations, the table element 106, in particular the table support element 108, is linearly displaceable relative to the table carrier structure 102. In the deployed use position P2, the table element 106 is positioned in front of a passenger seated behind the console element 200. For example, the table element 106 is positioned above a passenger's lap in the deployed use position P2.

The table element 106 is configured in some examples as a bi-fold table. For example, the table element 106 includes two table tops 204, 206 (or leaves) that are hinged to each other on respective lateral portions 226, 228. One table top 204 is foldable onto the other table top 206. The non-foldable table top 206 is fixedly mounted to the table support element 108 in one implementation. When the table tops 204, 206 are in an unfolded state (as shown in Figure 1C), both table tops 204, 206 are arranged in a single horizontal plane, for example, providing an enlarged dining surface or working surface for the passenger. The table element 106 is also usable in its folded state (as shown in Figure 1B), wherein the passenger movement space is increased, e.g., for egress or ingress. In operation, the table element 106 is storable within the table carrier structure 102 when the table tops 204, 206 are in the folded state. As such, the opening 122 of the front wall 120 is configured in the illustrated implementation to be smaller in comparison to a full width of the table element 106 in the unfolded state. Thus, the front wall 120 provides more mounting area, for example, for operational elements, such as switches to actuate a deployment of the table element 106 and/or lighting or other devices.

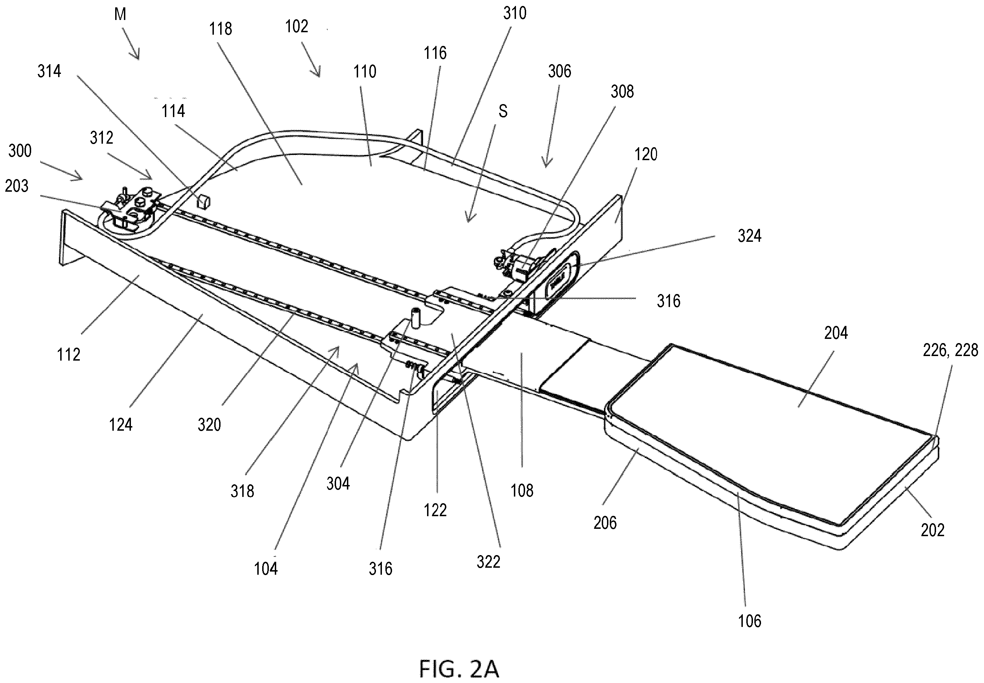

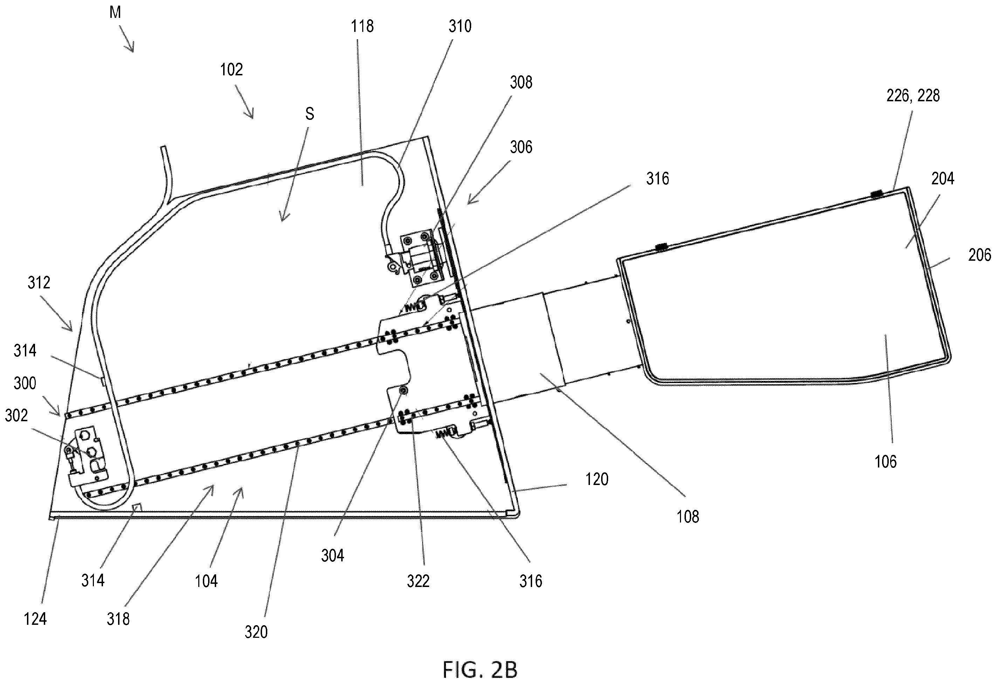

Figures 2A and 2B show schematically in a perspective view and a top view an implementation of the tray table apparatus 100. As described herein, the tray table apparatus 100 includes the table carrier structure 102, which is releasably mountable to the console element 200 shown in Figure 3 (configured as a housing or casing in this implementation). As can be seen, the tray table apparatus 100 includes the adjustment mechanism 104 housed within the table carrier structure 102. The adjustment mechanism 104 includes the table support element 108 movable relative to the table carrier structure 102. As described in more detail herein, the tray table apparatus 100 include the table element 106 fixed to the table support element 108, such that the table element 106 is movable between at least a retracted stowed position P1 (as shown in Figure 1A) in which the table element 106 is housed within the table carrier structure 102 and a deployed use position P2 as shown in Figures 2A and 2B, wherein the table tops 204, 206 are in a folded state and protrude in a direction away from the table carrier structure 102.

As can be seen in Figures 2A and 2B, the table carrier structure 102 further includes at least a side wall 124 extending vertically from the base plate 118 and which is connected to the front wall 120. Depending on a shape of the console element 200 and/or a position of an aligned seat 400 (shown in Figures 4A to 4C) relative to the console element 200, a shape of the table carrier structure 102 and/or an arrangement of the adjustment mechanism 104 within the table carrier structure 102 can be varied or adjust (e.g., sized and shaped accordingly). In the illustrated implementation, an end side of the adjustment mechanism 104 is arranged in an area of a rear corner of the base plate 118. The side wall 124 is configured to protect the adjustment mechanism 104 in the corner area of the table carrier structure 102 and laterally along the housing side 112.

The adjustment mechanism 104 includes a latch mechanism 300 having a latch device 302 and a corresponding latch element 304, such as a pin, bolt or restraining bar or loop, or other latching mechanism. The latch device 302 is configured as a rotary latch having an engaging pawl that engages the latch element 304 in a locked state in the retracted stowed position P1 of the table element 106 and which releases the latch element 304 when actuated. The latch device 302 is mounted on the base plate 118 of the table carrier structure 102 and the corresponding latch element 304 is mounted on the table support element 108, or vice versa. The adjustment mechanism 104 further includes a latch release mechanism 306 having a release actuation device 308 and a release cable 310, which is a Bowden cable connecting the release actuation device 308 and the latch device 302 of the latch mechanism 300. The release actuation device 308, such as a button or switch, is arranged in an area of the front wall 120 of the table carrier structure 102, for example, in another opening 324 formed in the front wall 120. When a passenger pushes the release actuation device 308, the release cable 310 transmits an actuation force to the latch device 302 to disengage and release the latch element 304. The release cable 310 is arranged within the table carrier structure 102, in particular in the space S behind the front wall 120 and above the base plate 118.

The adjustment mechanism 104 includes a mechanical deploy mechanism 312 having two distanced brackets 314 and two corresponding spring elements 316. The brackets 314 are mounted on the base plate 118 of the table carrier structure 102 and the corresponding spring elements 316 are mounted on the table support element 108. The spring elements 316 are compression springs in one example, which are held in a compressed state against a spring force in the retracted stowed position P1 of the table element 106 and the table support element 108, so that the latch element 304 is locked in the latch device 302. Upon release of the table support element 108 (with the table element 106 being in the retracted stowed position P1), the spring element 316 pushes the table support element 108 away from the bracket 314 (by the spring force) substantially towards the deployed use position P2, for example, until a front side 350 of the table element 106 protrudes from the opening 122. In this position, a front side 350 can be grabbed by the passenger to pull the table element 106 towards him or her.

The adjustment mechanism 104 further includes a rail device 318 having at least a lower rail 320 and an upper rail 322 in movable engagement with the lower rail 320. The lower rail 320 is attached to the base plate 118 of the table carrier structure 102 and the upper rail 322 is attached to the table support element 108, wherein the table support element 108 is linearly displaceable relative to the lower rail 320. The table element 106 is thereby linearly displaceable relative to the table carrier structure 102. In the deployed use position P2, the table element 106 is positioned in front of a passenger seated behind the console element 200. For example, the table element 106 is positioned above a passenger's lap in the deployed use position P2.

Figure 3 shows schematically in a rear view an implementation of a console element 200 including the tray table apparatus 100. The console element 200 includes a console base structure 222 with a front utility structure 224 (as shown in Figures 4A to 4C), an open rear structure 208, and the tray table apparatus 100 as described above, wherein the tray table apparatus 100 is releasably mounted to the console base structure 222 within the open rear structure 208. The console base structure 222 is configured substantially box-shaped with an upper wall 210 and lateral walls 212 extending in a downward direction from the upper wall 210, creating the open rear structure 208, wherein the tray table apparatus 100 is held in position in an area of the upper wall 210. It should be noted that the console base structure 222 can have different shapes and sizes, such as based on the configuration of the tray table apparatus 100.

The open rear structure 208 includes a footwell space 214 for a passenger seated behind the console base structure 222. The utility structure 224 includes at least one of a shelf, an armrest, a table, storage space and storage means, or other devices. The storage means can provide storage space for a remote control, magazines, suitcases, shoes, headphones or other items belonging to the passenger or airline. Additionally, the utility structure 224 can include service and operational elements, such as switches and an HMI-panel to control operable features of the seat 400 and/or a seat unit SU to SU" (as shown in Figures 4A to 4C).

The open rear structure 208 includes a mounting device 216 located at a defined distance (e.g., predefined or preconfigured) from the upper wall 210 in a downward direction, whereas the tray table apparatus 100, which is configured as a pre-assembled module M, is arranged between the upper wall 210 and the mounting device 216. The console element 200 further includes a display 218 in the illustrated example, such as an entertainment device for the passenger seated behind the console element 200 and which is mounted on a partition screen 220 vertically extending above the open rear structure 208.

Figures 4A to 4C show schematically in upper views, implementations of seat arrangements SA to SA" having a number of different seat units SU to SU" arranged one behind another. Each seat unit SU to SU", illustrated as aircraft seat units, include at least a seat 400 and a console element 200 as described herein, wherein the console element 200 is arranged substantially laterally relative to the seat 400 and providing a front utility structure for a passenger of the adjacent seat 400, and an open rear structure 208 with at least a tray table apparatus 100 for a passenger seated behind the respective console element 200.

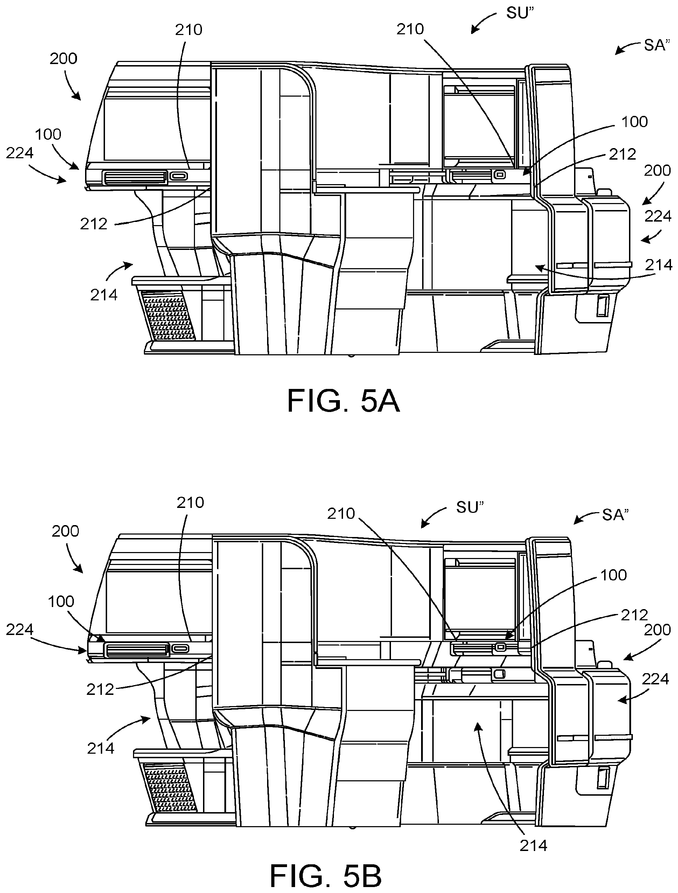

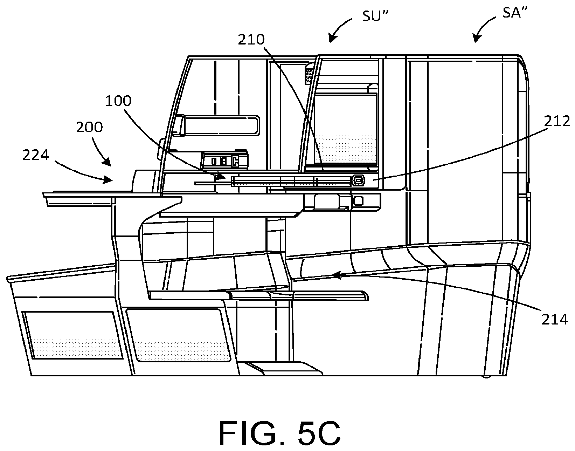

Figures 5A to 5C show in perspective views, in particular perspective rear views, the seat arrangement SA" having a number of seat units SU" arranged substantially behind each other. The tray table apparatus 100 of the illustrated seat unit SU'' is mounted to the console base structure 206 in a position relative to the upper wall 210 and/or to the lateral wall 212 in an area of the upper wall 210 of each console element 200.

Thus, various implementations as described in one or more examples, provide a tray table apparatus for a console element, wherein the console element can form part of or be installed within a seat unit.

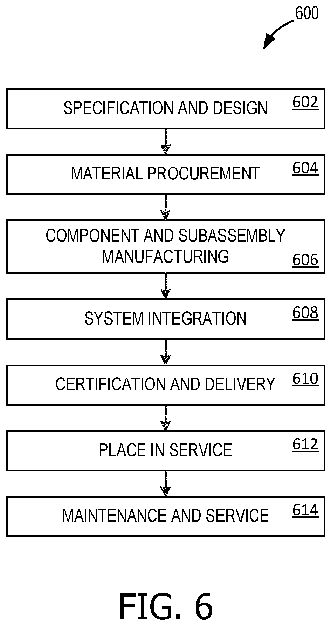

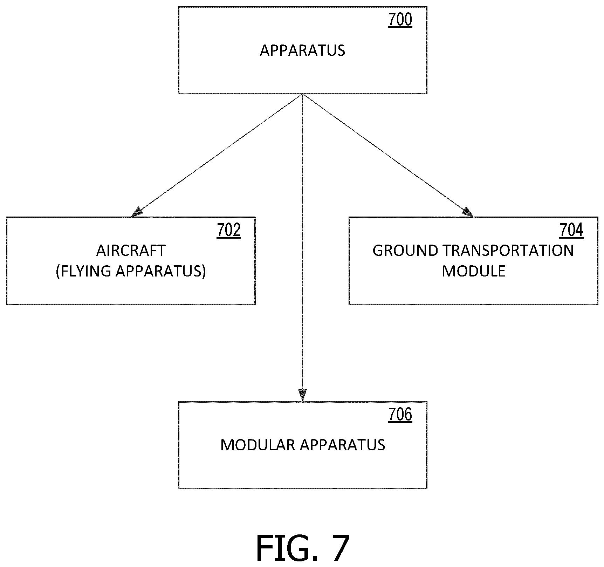

Some examples of the disclosure are used in manufacturing and service applications as shown and described in relation to Figures 6 to 8. Thus, examples of the disclosure are described in the context of an apparatus of manufacturing and service method 600 shown in Figure 6 and an apparatus 700 shown in Figure 7. In Figure 6, a diagram illustrating an apparatus manufacturing and service method 600 is depicted in accordance with an example. In one example, during pre-production, the apparatus manufacturing and service method 600 includes specification and design 602 of the apparatus 700 and material procurement 604. During production, component, and subassembly manufacturing 606 and system integration 608 of the apparatus 700 takes place. Thereafter, the apparatus 700 goes through certification and delivery 610 in order to be placed in service 612. While in service by a customer, the apparatus 700 is scheduled for routine maintenance and service 614, which in one example, includes modification, reconfiguration, refurbishment, and other maintenance or service subject to configuration management, described herein.

In one example, each of the processes of the apparatus manufacturing and service method 600 are performed or carried out by a system integrator, a third party, and/or an operator. In these examples, the operator is a customer. For the purposes of this description, a system integrator includes any number of apparatus manufacturers and major-system subcontractors; a third party includes any number of venders, subcontractors, and suppliers; and in one example, an operator is an owner of an apparatus or fleet of the apparatus, an administrator responsible for the apparatus or fleet of the apparatus, a user operating the apparatus, a leasing company, a military entity, a service organization, or the like.

With reference now to Figure 7, the apparatus 700 is provided. As shown in Figure 7, an example of the apparatus 700 is a flying apparatus 702, such as an aerospace vehicle, aircraft, air cargo, flying car, satellite, planetary probe, deep space probe, solar probe, and the like. As also shown in Figure 7, a further example of the apparatus 700 is a ground transportation apparatus 704, such as an automobile, a truck, heavy equipment, construction equipment, a boat, a ship, a submarine, and the like. A further example of the apparatus 700 shown in Figure 7 is a modular apparatus 706 that comprises at least one or more of the following modules: an air module, a payload module, and a ground module. The air module provides air lift or flying capability. The payload module provides the capability of transporting objects such as cargo or live objects (people, animals, etc.). The ground module provides the capability of ground mobility. The disclosed solutions and examples herein can be applied to each of the modules separately or in groups, such as air and payload modules, or payload and ground modules, etc. or all modules.

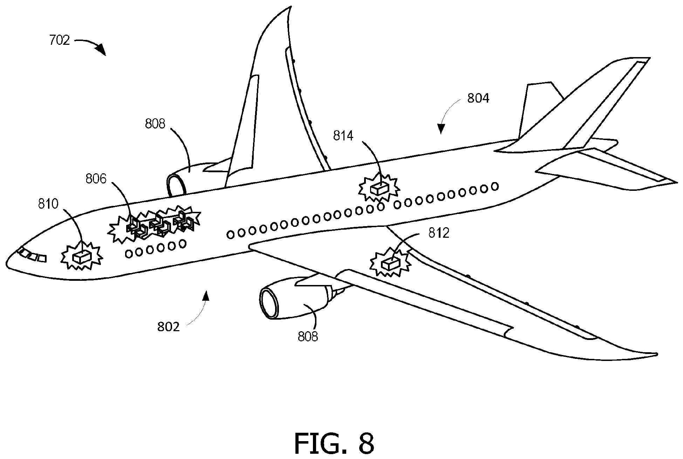

With reference now to Figure 8, a more specific diagram of the flying apparatus 702 is depicted in which an implementations of the disclosure are advantageously employed. In this example, the flying apparatus 702 is an aircraft produced by the apparatus manufacturing and service method 600 in Figure 6 and includes an airframe 802 with a plurality of systems 804 and an interior 806, which can include seats and the tray table apparatus 100. Examples of the plurality of systems 804 include one or more of a propulsion system 808, an electrical system 810, a hydraulic system 812, and an environmental system 814. However, other systems are also candidates for inclusion. Although an aerospace example is shown, different advantageous examples are applied to other industries, such as the automotive industry, etc.

This written description uses examples to disclose the various implementations of the disclosure, including the best mode, and also to enable any person of ordinary skill in the art to practice the various implementations of the disclosure, including making and using any devices or systems and performing any incorporated methods. The patentable scope of the various implementations of the disclosure is defined by the claims, and can include other examples that occur to those persons of ordinary skill in the art. Such other examples are intended to be within the scope of the claims if the examples have structural elements that fall within the scope of the appended claims.

## Claims

1. A tray table apparatus (100), comprising:
a table carrier structure (102) releasably mountable to a console element (200), the table carrier structure (102) configured as a housing;
an adjustment mechanism (104) housed within the table carrier structure (102), the adjustment mechanism (104) having a table support element (108) movable relative to the table carrier structure (102); and
a table element (106) coupled to the table support element (108) and together movable between at least a retracted stowed position (P1) in which the table element (106) is housed within the table carrier structure (102) and a deployed use position (P2) in which the table element (106) protrudes from the table carrier structure (102),
wherein the table carrier structure (3) comprises at least a base plate (118) and a front wall (120) extending vertically from the base plate (118) that together define a space (S) behind the front wall (120), and wherein (i) in the retracted stowed position (P1) the table element (106) is fully retracted and arranged behind the front wall (120) and (ii) in the deployed use position (P2) the table element (106) is guided through an opening of the front wall (120) of the table carrier structure (102) to extend from the front wall (120),
wherein the adjustment mechanism (104) is supported on the base plate (118) of the table carrier structure (102),
wherein the adjustment mechanism (104) comprises at least a latch mechanism (300) having a latch device (302) arranged on the base plate (118) of the table carrier structure (102) and a corresponding latch element (304) arranged on the table support element (108), and
wherein the latch device (302) engages the corresponding latch element (308) in the retracted stowed position (P1) of the table element (106),
wherein the adjustment mechanism (104) comprises at least a latch release mechanism (306) having at least a release actuation device (308) arranged in an area of the front wall (120) of the table carrier structure (102) and a release cable (310) connecting the release actuation device (308) and the latch device (302),
wherein the release cable (310) is a Bowden cable.

2. The tray table apparatus (100) of claim 1, wherein the tray table apparatus (100) is a pre-assembled module (M) configured to be releasably mountable to the console element (200), wherein the table carrier structure (102), the adjustment mechanism (104), and the table element (106) are pre-assembled to form the pre-assembled module (M).

3. The tray table apparatus (100) of claim 1 or 2, wherein the release cable (310) is arranged within the table carrier structure (102).

4. The tray table apparatus (100) of any of claims 1 to 3, wherein the adjustment mechanism (104) comprises at least a deploy mechanism (312) having at least a bracket (314) arranged on the base plate (118) of the table carrier structure (102) and a corresponding spring element (316) arranged on the table support element (108).

5. The tray table apparatus (100) of claim 4, wherein the corresponding spring element (316) is a compression spring held in a compressed state against a spring force in the retracted stowed position (P1) of the table element (106), and wherein upon release of the table element (106) in the retracted stowed position (P1), the corresponding spring element (316) pushes the table element (106) away from the bracket by the spring force and substantially towards the deployed use position (P2).

6. The tray table apparatus (100) of any of claims 1 to 5, wherein the adjustment mechanism (104) comprises at least a rail device (318) having at least a lower rail (320) coupled to the base plate (118) of the table carrier structure (102) and an upper rail (322) coupled to the table support element (108), wherein the upper rail (322) is movable relative to the lower rail (320).

7. The tray table apparatus (100) of any of claims 1 to 6, wherein the table element (106) is linearly displaceable relative to the table carrier structure (102).

8. The tray table apparatus (100) of any of claims 1 to 7, wherein the table element (106) is a bi-fold table.

9. A console element (200) for a seat, the console element (200) comprising:
a console base structure (222) having a front utility structure (224) and an open rear structure (208); and
the tray table apparatus (100) of any of claims 1 to 8, wherein the table carrier structure (102) is releasably mountable to the console base structure (222).

10. The console element (200) of claim 9, wherein the tray table apparatus (100) is releasably mounted to the console base structure (222) within the open rear structure (208).

11. The console element (200) of claim 9 or 10, wherein the console base structure (222) is configured substantially box-shaped with an upper wall (210) and lateral walls (212) extending in a downward direction from the upper wall (210), wherein the tray table apparatus (100) is held in position in an area of the upper wall (210).

12. The console element (200) of claim 11, wherein the open rear structure comprises (208) a mounting device (216) located at a defined distance from the upper wall (210) in a downward direction, and the tray table apparatus (100) is arranged between the upper wall (210) and the mounting device (216).

13. An aircraft seat unit (SU), comprising:
a seat (400); and
a console element (200) arranged substantially laterally relative to the seat (400) and having a front utility structure (224) for a passenger of the seat (400) and an open rear structure (208) with at least a tray table apparatus (100) for a passenger seated behind the console element (200), wherein,
the tray table apparatus (100) being configured according to the tray table apparatus (100) of any of claim 1 to 8, wherein the table carrier structure (102) is releasably mountable to a console base structure (222) of the console element (200).

14. The aircraft seat unit (SU) of claim 13, wherein the tray table apparatus (100) is releasably mounted to the console base structure (222) within an open rear structure (208).

15. The aircraft seat unit (SU) of claim 13 or 14, wherein the console base structure (222) is configured substantially box-shaped with an upper wall (210) and lateral walls (212) extending in a downward direction from the upper wall (210), wherein the tray table apparatus (100) is held in position in an area of the upper wall (210).

## Patentansprüche

1. Klapptischeinrichtung (100), umfassend:
eine Tischträgerstruktur (102), die an einem Konsolenelement (200) lösbar montierbar ist, wobei die Tischträgerstruktur (102) als ein Gehäuse konfiguriert ist;
einen Einstellmechanismus (104), der innerhalb der Tischträgerstruktur (102) untergebracht ist, wobei der Einstellmechanismus (104) ein Tischstützelement (108) aufweist, das relativ zu der Tischträgerstruktur (102) bewegbar ist; und
ein Tischelement (106), das mit dem Tischstützelement (108) gekoppelt ist und zusammen zwischen mindestens einer eingefahrenen Stauposition (P1), in der das Tischelement (106) innerhalb der Tischträgerstruktur (102) untergebracht ist, und einer ausgefahrenen Verwendungsposition (P2) bewegbar ist, in der das Tischelement (106) aus der Tischträgerstruktur (102) hervorsteht,
wobei die Tischträgerstruktur (3) mindestens eine Grundplatte (118) und eine Vorderwand (120) umfasst, die sich von der Grundplatte (118) vertikal erstreckt, die zusammen einen Raum (S) hinter der Vorderwand (120) definieren, und wobei (i) das Tischelement (106) in der eingefahrenen Stauposition (P1) vollständig eingefahren und hinter der Vorderwand (120) angeordnet ist und (ii) das Tischelement (106) in der ausgefahrenen Verwendungsposition (P2) durch eine Öffnung der Vorderwand (120) der Tischträgerstruktur (102) hindurch geführt ist, um sich von der Vorderwand (120) zu erstrecken,
wobei der Einstellmechanismus (104) auf der Grundplatte (118) der Tischträgerstruktur (102) gestützt ist,
wobei der Einstellmechanismus (104) mindestens einen Verriegelungsmechanismus (300), der eine Verriegelungsvorrichtung (302) aufweist, die auf der Grundplatte (118) der Tischträgerstruktur (102) angeordnet ist, und ein entsprechendes Verriegelungselement (304) umfasst, das auf dem Tischstützelement (108) angeordnet ist, und
wobei die Verriegelungsvorrichtung (302) in der eingefahrenen Stauposition (P1) des Tischelements (106) mit dem entsprechenden Verriegelungselement (308) in Eingriff steht,
wobei der Einstellmechanismus (104) mindestens einen Verriegelungsauslösemechanismus (306), der mindestens eine Auslösebetätigungsvorrichtung (308) aufweist, die in einem Bereich der Vorderwand (120) der Tischträgerstruktur (102) angeordnet ist, und ein Auslösekabel (310) umfasst, das die Auslösebetätigungsvorrichtung (308) und die Verriegelungsvorrichtung (302) verbindet,
wobei das Auslösekabel (310) ein Bowdenzug ist.

2. Klapptischeinrichtung (100) nach Anspruch 1, wobei die Klapptischeinrichtung (100) ein vorher zusammengebautes Modul (M) ist, das konfiguriert ist, um an dem Konsolenelement (200) lösbar montierbar zu sein, wobei die Tischträgerstruktur (102), der Einstellmechanismus (104) und das Tischelement (106) vorher zusammengebaut sind, um das vorher zusammengebaute Modul (M) auszubilden.

3. Klapptischeinrichtung (100) nach Anspruch 1 oder 2, wobei das Auslösekabel (310) innerhalb der Tischträgerstruktur (102) angeordnet ist.

4. Klapptischeinrichtung (100) nach einem der Ansprüche 1 bis 3, wobei der Einstellmechanismus (104) mindestens einen Ausfahrmechanismus (312), der mindestens eine Halterung (314) aufweist, die auf der Grundplatte (118) der Tischträgerstruktur (102) angeordnet ist, und ein entsprechendes Federelement (316) umfasst, das auf dem Tischstützelement (108) angeordnet ist.

5. Klapptischeinrichtung (100) nach Anspruch 4, wobei das entsprechende Federelement (316) eine Druckfeder ist, die in der eingefahrenen Stauposition (P1) des Tischelements (106) in einem zusammengedrückten Zustand gegen eine Federkraft gehalten wird, und wobei bei dem Lösen des Tischelements (106) in der eingefahrenen Stauposition (P1), das entsprechende Federelement (316) das Tischelement (106) durch die Federkraft von der Halterung weg und im Wesentlichen zu der ausgefahrenen Verwendungsposition (P2) hin drückt.

6. Klapptischeinrichtung (100) nach einem der Ansprüche 1 bis 5, wobei der Einstellmechanismus (104) mindestens eine Schienenvorrichtung (318) umfasst, die mindestens eine untere Schiene (320), die mit der Grundplatte (118) der Tischträgerstruktur (102) gekoppelt ist, und eine obere Schiene (322) aufweist, die mit dem Tischstützelement (108) gekoppelt ist, wobei die obere Schiene (322) relativ zu der unteren Schiene (320) bewegbar ist.

7. Klapptischeinrichtung (100) nach einem der Ansprüche 1 bis 6, wobei das Tischelement (106) relativ zu der Tischträgerstruktur (102) linear verschiebbar ist.

8. Klapptischeinrichtung (100) nach einem der Ansprüche 1 bis 7, wobei das Tischelement (106) ein zweifach klappbarer Tisch ist.

9. Konsolenelement (200) für einen Sitz, das Konsolenelement (200) umfassend:
eine Konsolengrundstruktur (222), die eine vordere Nutzstruktur (224) und eine offene hintere Struktur (208) aufweist; und
die Klapptischeinrichtung (100) nach einem der Ansprüche 1 bis 8, wobei die Tischträgerstruktur (102) an der Konsolengrundstruktur (222) lösbar montierbar ist.

10. Konsolenelement (200) nach Anspruch 9, wobei die Klapptischeinrichtung (100) innerhalb der offenen hinteren Struktur (208) an der Konsolengrundstruktur (222) lösbar montiert ist.

11. Konsolenelement (200) nach Anspruch 9 oder 10, wobei die Konsolengrundstruktur (222) im Wesentlichen kastenförmig mit einer oberen Wand (210) und Seitenwänden (212) konfiguriert ist, die sich von der oberen Wand (210) nach unten erstrecken, wobei die Klapptischeinrichtung (100) in einem Bereich der oberen Wand (210) in Position gehalten wird.

12. Konsolenelement (200) nach Anspruch 11, wobei die offene hintere Struktur (208) eine Montagevorrichtung (216) umfasst, die sich in einem definierten Abstand von der oberen Wand (210) nach unten befindet, und die Klapptischeinrichtung (100) zwischen der oberen Wand (210) und der Montagevorrichtung (216) angeordnet ist.

13. Luftfahrzeugsitzeinheit (SU), umfassend:
einen Sitz (400); und
ein Konsolenelement (200), das im Wesentlichen seitlich relativ zu dem Sitz (400) angeordnet ist und eine vordere Nutzstruktur (224) für einen Passagier des Sitzes (400) und eine offene hintere Struktur (208) mit mindestens einer Klapptischeinrichtung (100) für einen Passagier aufweist, der hinter dem Konsolenelement (200) sitzt, wobei
die Klapptischeinrichtung (100) gemäß der Klapptischeinrichtung (100) nach einem der Ansprüche 1 bis 8 konfiguriert ist, wobei die Tischträgerstruktur (102) an einer Konsolengrundstruktur (222) des Konsolenelements (200) lösbar montierbar ist.

14. Luftfahrzeugsitzeinheit (SU) nach Anspruch 13, wobei die Klapptischeinrichtung (100) innerhalb einer offenen hinteren Struktur (208) an der Konsolengrundstruktur (222) lösbar montiert ist.

15. Luftfahrzeugsitzeinheit (SU) nach Anspruch 13 oder 14, wobei die Konsolengrundstruktur (222) im Wesentlichen kastenförmig mit einer oberen Wand (210) und Seitenwänden (212) konfiguriert ist, die sich von der oberen Wand (210) nach unten erstrecken, wobei die Klapptischeinrichtung (100) in einem Bereich der oberen Wand (210) in Position gehalten wird.

## Revendications

1. Appareil de table à plateau (100) comprenant :
une structure porteuse de table (102) pouvant être montée de manière amovible sur un élément de console (200), la structure porteuse de table (102) étant configurée comme un boîtier ;
un mécanisme de réglage (104) logé au sein de la structure porteuse de table (102), le mécanisme de réglage (104) ayant un élément de support de table (108) mobile par rapport à la structure porteuse de table (102) ; et
un élément de table (106) accouplé à l'élément de support de table (108) et conjointement mobile entre au moins une position de rangement rétractée (P1) dans laquelle l'élément de table (106) est logé au sein de la structure de support de table (102) et une position d'utilisation déployée (P2) dans laquelle l'élément de table (106) dépasse de la structure de support de table (102),
dans lequel la structure porteuse de table (3) comprend au moins une plaque de base (118) et une paroi avant (120) s'étendant verticalement à partir de la plaque de base (118) qui conjointement définissent un espace (S) derrière la paroi avant (120), et dans lequel (i) dans la position de rangement rétractée (P1) l'élément de table (106) est entièrement rétracté et agencé derrière la paroi avant (120) et (ii) dans la position d'utilisation déployée (P2) l'élément de table (106) est guidé à travers une ouverture de la paroi avant (120) de la structure porteuse de table (102) pour s'étendre à partir de la paroi avant (120),
dans lequel le mécanisme de réglage (104) est supporté sur la plaque de base (118) de la structure porteuse de table (102),
dans lequel le mécanisme de réglage (104) comprend au moins un mécanisme de loquet (300) ayant un dispositif de loquet (302) agencé sur la plaque de base (118) de la structure porteuse de table (102) et un élément de loquet (304) correspondant agencé sur l'élément de support de table (108), et
dans lequel le dispositif de loquet (302) vient en prise avec l'élément de loquet (308) correspondant dans la position de rangement rétractée (P1) de l'élément de table (106),
dans lequel le mécanisme de réglage (104) comprend au moins un mécanisme de libération de loquet (306) ayant au moins un dispositif d'actionnement de libération (308) agencé dans une zone de la paroi avant (120) de la structure porteuse de table (102) et un câble de libération (310) reliant le dispositif d' actionnement de libération (308) et le dispositif de loquet (302),
dans lequel le câble de libération (310) est un câble Bowden.

2. Appareil de table à plateau (100) selon la revendication 1, dans lequel l'appareil de table à plateau (100) est un module préassemblé (M) conçu pour pouvoir être monté de manière amovible sur l'élément de console (200), dans lequel la structure porteuse de table (102), le mécanisme de réglage (104), et l'élément de table (106) sont préassemblés pour former le module préassemblé (M).

3. Appareil de table à plateau (100) selon la revendication 1 ou 2, dans lequel le câble de libération (310) est agencé au sein de la structure porteuse de table (102).

4. Appareil de table à plateau (100) selon l'une quelconque des revendications 1 à 3, dans lequel le mécanisme de réglage (104) comprend au moins un mécanisme de déploiement (312) ayant au moins un gousset (314) agencé sur la plaque de base (118) de la structure porteuse de table (102) et un élément de ressort (316) correspondant agencé sur l'élément de support de table (108).

5. Appareil de table à plateau (100) selon la revendication 4, dans lequel l'élément de ressort (316) correspondant est un ressort de compression maintenu dans un état comprimé contre une force de ressort dans la position de rangement rétractée (P1) de l'élément de table (106), et dans lequel, lors de la libération de l'élément de table (106) dans la position de rangement rétractée (P1), l'élément de ressort (316) correspondant pousse l'élément de table (106) à l'écart du gousset par la force de ressort et sensiblement vers la position d'utilisation déployée (P2).

6. Appareil de table à plateau (100) selon l'une quelconque des revendications 1 à 5, dans lequel le mécanisme de réglage (104) comprend au moins un dispositif de rail (318) ayant au moins un rail inférieur (320) accouplé à la plaque de base (118) de la structure porteuse de table (102) et un rail supérieur (322) accouplé à l'élément de support de table (108), dans lequel le rail supérieur (322) est mobile par rapport au rail inférieur (320).

7. Appareil de table à plateau (100) selon l'une quelconque des revendications 1 à 6, dans lequel l'élément de table (106) est linéairement déplaçable par rapport à la structure porteuse de table (102).

8. Appareil de table à plateau (100) selon l'une quelconque des revendications 1 à 7, dans lequel l'élément de table (106) est une table à deux volets.

9. Élément de console (200) pour un siège, l'élément de console (200) comprenant :
une structure de base de console (222) ayant une structure utilitaire avant (224) et une structure arrière ouverte (208) ; et
l'appareil de table à plateau (100) selon l'une quelconque des revendications 1 à 8, dans lequel la structure porteuse de table (102) peut être montée de manière amovible sur la structure de base de console (222).

10. Élément de console (200) selon la revendication 9, dans lequel l'appareil de table à plateau (100) est monté de manière amovible sur la structure de base de console (222) au sein de la structure arrière ouverte (208).

11. Élément de console (200) selon la revendication 9 ou 10, dans lequel la structure de base de console (222) est conçue sensiblement en forme de boîte avec une paroi supérieure (210) et des parois latérales (212) s'étendant dans une direction descendante à partir de la paroi supérieure (210), dans lequel l'appareil de table à plateau (100) est maintenu en position dans une zone de la paroi supérieure (210).

12. Élément de console (200) selon la revendication 11, dans lequel la structure arrière ouverte (208) comprend un dispositif de montage (216) situé à une distance définie de la paroi supérieure (210) dans une direction descendante, et l'appareil de table à plateau (100) est agencé entre la paroi supérieure (210) et le dispositif de montage (216).

13. Unité de siège d'aéronef (SU), comprenant :
un siège (400) ; et
un élément de console (200) agencé sensiblement latéralement par rapport au siège (400) et ayant une structure utilitaire avant (224) pour un passager du siège (400) et une structure arrière ouverte (208) avec au moins un appareil de table à plateau (100) pour un passager assis derrière l'élément de console (200), dans laquelle,
l'appareil de table à plateau (100) est conçu selon l'appareil de table à plateau (100) de l'une quelconque revendication 1 à 8, dans laquelle la structure porteuse de table (102) peut être montée de manière amovible sur une structure de base de console (222) de l'élément de console (200).

14. Unité de siège d'aéronef (SU) selon la revendication 13, dans laquelle l'appareil de table à plateau (100) est monté de manière amovible sur la structure de base de console (222) au sein d'une structure arrière ouverte (208).

15. Unité de siège d'aéronef (SU) selon la revendication 13 ou 14, dans laquelle la structure de base de console (222) est conçue sensiblement en forme de boîte avec une paroi supérieure (210) et des parois latérales (212) s'étendant dans une direction descendante à partir de la paroi supérieure (210), dans laquelle l'appareil de table à plateau (100) est maintenu en position dans une zone de la paroi supérieure (210).
